# EUROPÄISCHE PATENTSCHRIFT

(11) **EP 0 459 128 B1**
(45) Veröffentlichungstag und Bekanntmachung des Hinweises auf die Patenterteilung: **22.06.1994**
(21) Anmeldenummer: 91106091.1
(22) Anmeldetag: 17.04.1991
(51) Int. Cl.: G01M 11/06, F21V 21/14

(54) **Prüfgerät für Fahrzeugscheinwerfer**
Testing apparatus for motor vehicle headlamps
Appareil d'essai pour phares de véhicule

(30) Priorität: 30.05.1990 DE 4017355
(43) Veröffentlichungstag der Anmeldung: 04.12.1991
(73) Patentinhaber: Hella KG Hueck & Co., 59552 Lippstadt (DE)
(72) Erfinder: Pähler, Hermann, W-4790 Paderborn (DE)

(56) Entgegenhaltungen:
- US-A- 2 358 010
- Richter/Voss/Kozer "Bauelemente der Feinmechanik" 8. Auflage, Berlin (DE), 1959, Seite 269

## Beschreibung

Die Erfindung bezieht sich auf ein Prüfgerät für Fahrzeugscheinwerfer mit einem Optikkasten, welcher an einem Gestell in der Höhe verstellbar geführt ist, und mit einer den Optikkasten an einer vertikal verlaufenden Säule selbsttragenden Arretierungsvorrichtung, welche an der Säule in unterschiedlichen Höhen lösbar und festsetzbar ist.

Bei bekannten Prüfgeräten für Fahrzeugscheinwerfer (siehe DE-PS 911 669) besteht die Arretierungsvorrichtung aus fest mit dem Optikkasten verbundenen Schellen, durch welche die Säule hindurchführt und durch deren freie Endabschnitte jeweils ein Schraubbolzen hindurchführt. Solche Arretierungsvorrichtungen sind zwar einfach in ihrem Aufbau, jedoch ist bei einem zu klein aufgewendeten Drehmoment am Schraubbolzen die Schelle nicht sicher an der Säule festgesetzt. Außerdem ist bei häufigem Gebrauch des Optikkastens kein kontinuierliches und ruckfreies Verstellen des Optikkastens in der Höhe möglich, wenn nach dem Lösen des Schraubbolzens die Schelle wegen Materialermüdung nicht mehr weit genug auffedert. Ferner sind Arretierungsvorrichtungen für Optikkästen (siehe DE-PS 717 890) bekannt, welche aus einer fest mit dem Optikkasten verbundenen Hülse bestehen, durch welche bei gelöster Arretierungsvorrichtung die Säule mit Spiel hindurchgeht. In der Wandung der Hülse ist ein Schraubbolzen eingeschraubt. Beim Verdrehen des Schraubbolzens zur Säule hin, drückt sich dieser mit seiner Stirnfläche in die Säule ein, wodurch der Optikkasten an der Säule festgesetzt ist. Letzteres ist jedoch nicht sicher, wenn das Drehmoment beim Eindrehen des Schraubbolzens zu klein ist. Außerdem ist bei einem zu großen Drehmoment die Deformation an der Säule größer als notwendig.

Aus der US-A-2,358,010 ist ein Prüfgerät für Fahrzeugscheinwerfer bekannt geworden, bei welchem der in der Höhe verstellbar geführte Optikkasten durch die in Figur 8 der Zeichnung dargestellte Arretierungsvorrichtung festsetzbar ist. Diese Arretierungsvorrichtung dient der Feineinstellung des Optikkastens. Die Feineinstellung kann erst dann vorgenommen werden, wenn eine den Optikkasten an der vertikal verlaufenden Säule selbsttragende Arretierungsvorrichtung gelöst ist, da die der Feineinstellung dienende Arretierungsvorrichtung in ihrer Normalstellung nicht in einem klemmenden Eingriff mit der vertikalen Säule ist. Der Optikkasten kann also erst nachdem die den Optikkasten selbsttragende Arretierungsvorrichtung gelöst ist von Hand untergefaßt werden, um ihn aufwärts bzw. abwärts zu bewegen. Nachdem der Optikkasten in der Höhe genau eingestellt ist, muß ein Hebel der zur Feineinstellung dienenden Arretierungsvorrichtung von Hand so lange gedrückt gehalten werden, bis die andere Arretierungsvorrichtung den Optikkasten selbsttragend an der Säule festsetzt. Diese Arbeitsschritte, welche zum Verstellen des Optikkastens notwendig sind, sind in ihrer Reihenfolge unbedingt einzuhalten, da bei einem zu frühen Loslassen des zweiarmigen Hebels der zur Feineinstellung dienenden Arretierungsvorrichtung, das heißt, bevor die andere Arretierungsvorrichtung an der vertikalen Säule festgesetzt ist, der Optikkasten nach unten fallen kann und somit beschädigt oder sogar zerstört werden kann.

Aus dem Buch Richter/Voss/Kozer "Bauelemente der Feinmechanik", achte Auflage, Berlin 1959, ist zwar eine von einem Klemmgesperre gebildete Arretierungsvorrichtung bekannt, jedoch wird diese nicht in Zusammenhang mit einem Prüfgerät für Fahrzeugscheinwerfer genannt.

Aufgabe der Erfindung ist es nun, das im Oberbegriff des überarbeiteten Anspruchs 1 beschriebene Prüfgerät für Fahrzeugscheinwerfer derart zu verbessern, daß die Arretierungsvorrichtung den Optikkasten, auch wenn dieser in seiner Höhe sehr häufig verstellt wird, immer wieder mit einer gleich großen und bei der Entwicklung des Prüfgerätes vorher bestimmbaren Kraft an der Säule selbsttätig festsetzt, und der Optikkasten ohne Hilfsmittel verwenden zu müssen von Hand leicht und schnell sowohl von der Säule gelöst als auch an dieser festgesetzt werden kann, das heißt, die Arretierungsvorrichtung sowohl während der Feineinstellung als auch in der Endstellung des Optikkastens ihn selbsttragend an der Säule festsetzen kann. Außerdem soll sowohl die Arretierungsvorrichtung des Optikkastens nicht so weit vom Prüfgerät nach außen abstehen müssen, damit durch sie keine Verletzungsgefahr besteht, als auch für die Arretierungsvorrichtung kein separates Gehäuse notwendig sein. Ferner soll die Arretierungsvorrichtung von der der Sammellinse abgewandten Rückseite des Optikkastens her gut bedienbar sein und der Optikkasten durch einfaches Untergreifen leichtgängig und ruckfrei in der Höhe verstellbar sein. Darüberhinaus soll die Arretierungsvorrichtung weiterhin sehr einfach in ihrem Aufbau und sehr leicht montierbar sein. Diese Aufgabe wird durch die im kennzeichnenden Teil des Anspruchs 1 angegebenen Merkmale gelöst. Bei einer solchen vorteilhaften Lösung liegt der Optikkasten in seiner zweiten Endstellung auf dem Hebel auf und drückt den Hebel mit Randabschnitten seiner Öffnung gegen die Säule. In dieser zweiten Endstellung verläuft der Hebel, ausgehend von seiner Anlagefläche für den Optikkasten bzw. seiner Schwenkachse, nach oben, und die Kraft, mit welcher er mit den Randabschnitten seiner Öffnung gegen die Säule drückt, ist immer gleich groß, da sie von dem Gewicht des Optikkastens abhängt. Beim Lösen des Optikkastens aus seinem Festsitz, ist die Platte nach unten hin in ihre erste Endstellung zu verschwenken. Hierbei besteht zwischen der Säule und der Öffnung der Platte so viel Spiel, daß der Optikkasten von Hand, z. B. durch einfaches Untergreifen des Optikkastens, in seiner Höhe verstellbar ist. Nachdem der Optikkasten in seine gewünschte Höhe verstellt ist, ist er durch Schwenken der Platte nach oben hin an der Säule festsetzbar. Hierbei entsteht durch das auf die Platte wirkende Gewicht des Optikkastens ein klemmender Festsitz der Platte an der Säule, und da der Optikkasten auf der Platte anliegt, ist dieser ebenfalls an der Säule festgesetzt. Mit Anspruch 2 wird in der ersten Endstellung der Platte ein möglichst großes Spiel zwischen ihrer Öffnung und der Säule erreicht. Mit Anspruch 3 erhält man ein Prüfgerät, bei welchem nach dem Loslassen der Platte in der ersten Endstellung diese durch das federnde Element selbsttätig in ihre zweite Endstellung zurückschwenkt. Mit Anspruch 4 wird eine platzsparende Ausführung der Arretierungsvorrichtung vorgeschlagen. Mit den Ansprüchen 5 bis 8 erhält man sowohl eine von der Außenseite des Gehäuses her verstellbare Platte, welche aus dem Festsitz mit der Säule leicht zu lösen ist, da die Handhabe einen größeren Abstand zur Säule aufweist als die Schwenkachse bzw. die Anlagefläche der Platte für den Optikkasten. Damit in der zweiten Endstellung der Platte der Druck der Randbereiche ihrer Öffnung gegen die Säule nicht so groß ist, daß die Randbereiche sich zu tief in die Säule eindrücken, ist es vorteilhaft, den Schwenkwinkel, welcher zwischen der ersten und zweiten Endstellung der Platte besteht, bei der Entwicklung des Prüfgerätes so klein wie möglich zu halten. Der Schwenkwinkel ist umso kleiner, je kleiner das Spiel zwischen der Öffnung der Platte und der Säule bei gelöster Arretierungsvorrichtung ist. Der Schwenkwinkel sollte zumindest noch so groß gewählt sein, daß ein sicherer Festsitz der Platte an der Säule gegeben ist. Mit den Ansprüchen 9 bis 14 ist die Platte sicher an der Schwenkachse gehalten, und bei ihrem Verschwenken ist sie in Richtung ihrer Längsausdehnung um einen bestimmten Weg verschiebbar, durch welchen auch bei einem größeren Schwenkwinkel der Platte erreicht wird, daß in der ersten Endstellung zwischen der Säule und der Öffnung der Platte umlaufend genügend Spiel besteht und in der zweiten Endstellung die öffnung der Platte mit zwei sich gegenüberliegenden Randbereichen an der Säule gedrückt anliegt. Mit den Ansprüchen 15 und 16 wird eine sehr stabile Platte vorgeschlagen. Mit den Ansprüchen 17 und 18 wird ein sehr fester Sitz der Platte an der Säule erreicht, da sich die Platte geringfügig mit Kanten ihrer öffnung in die Säule eindrückt. Wird diese Ausführungsform nach den Ansprüchen 19 und 20 ergänzt, so ist die Deformierung der Säule durch die Kanten an der Platte sehr gering, und eine Deformation der Kanten der Platte ist weitestgehend ausgeschlossen, da die Kanten von in einem stumpfen Winkel zueinander verlaufenden Flächen gebildet sind. Hierbei ist es weiterhin vorteilhaft, daß bei der Montage der Arretierungsvorrichtung die Platte und ihre Schwenkachse wegen des kreisrunden Querschnitts der Säule nicht genau zur Säule ausgerichtet werden müssen, um eine Anlage der Kantenabschnitte über ihre gesamte Länge an der Säule zu erhalten. Mit den Ansprüchen 21 bis 23 ist, auch wenn nach häufigem Verstellen des Optikkastens die Säule sehr kleine Kerben aufweist, der Optikkasten weiterhin kontinuierlich und ruckfrei in der Höhe verstellbar, da dieser ausschließlich an der Führungssäule geführt ist.

In der Zeichnung ist ein Ausführungsbeispiel der Erfindung dargestellt, und zwar zeigt
Figur 1 eine Teilansicht eines vertikal verlaufenden Längsschnitts durch einen Optikkasten eines Fahrzeugscheinwerfers mit einer den Optikkasten in seiner Höhe festgesetzten Arretierungsvorrichtung,
Figur 2 die in Figur 1 dargestellte Teilansicht des Optikkastens, jedoch bei gelöster Arretierungsvorrichtung,
Figur 3 den Teilausschnitt X der in Figur 1 dargestellten Arretierungsvorrichtung,

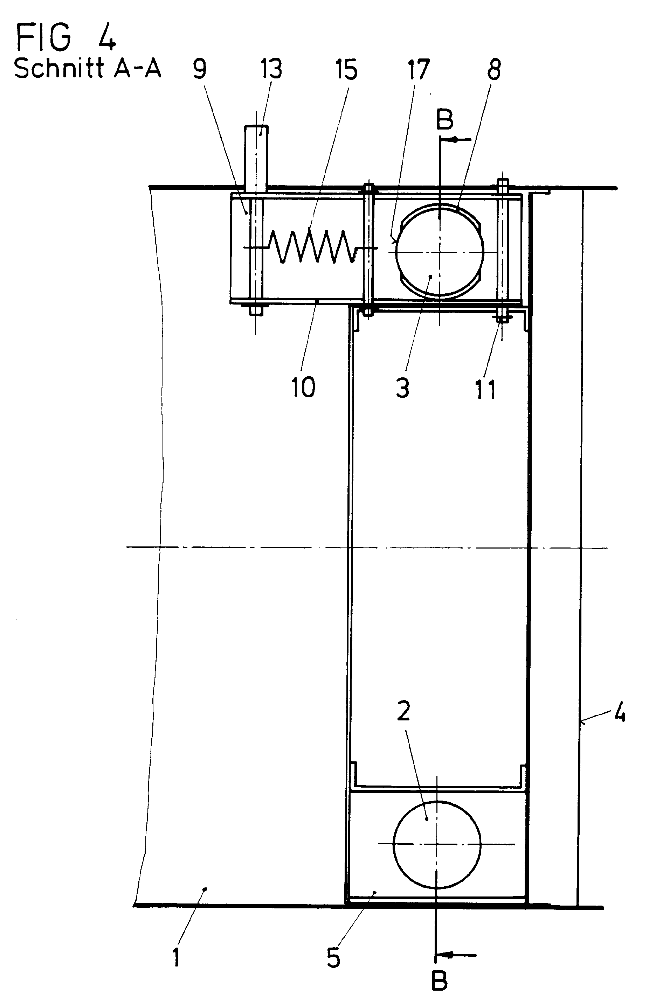

Figur 4 einen Schnitt nach der Linie A-A durch den Optikkasten und

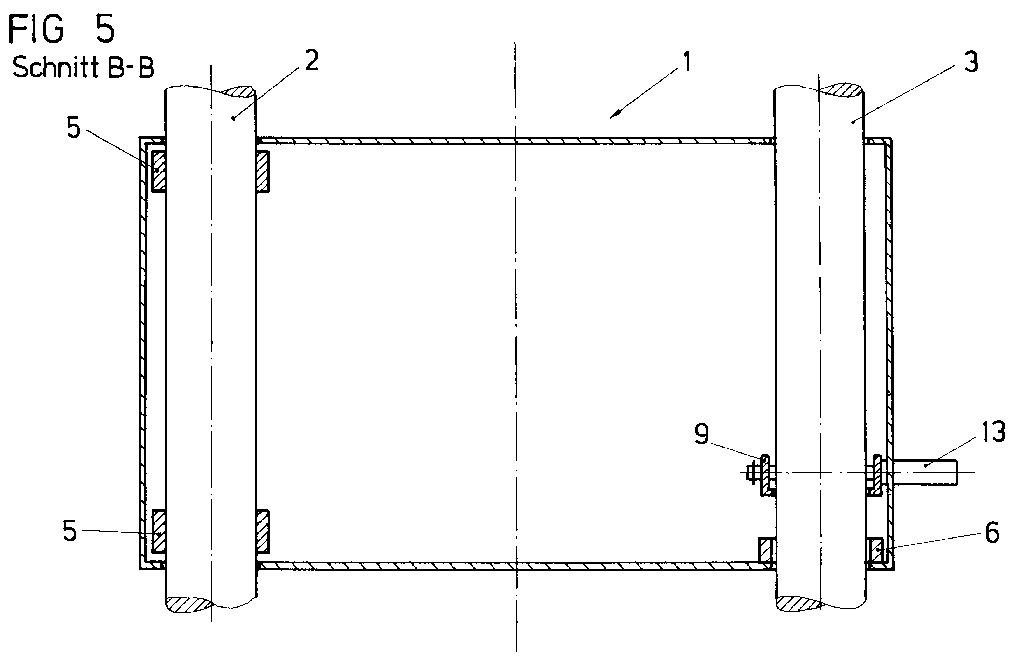

Figur 5 einen Schnitt nach der Linie B-B durch den Optikkasten.

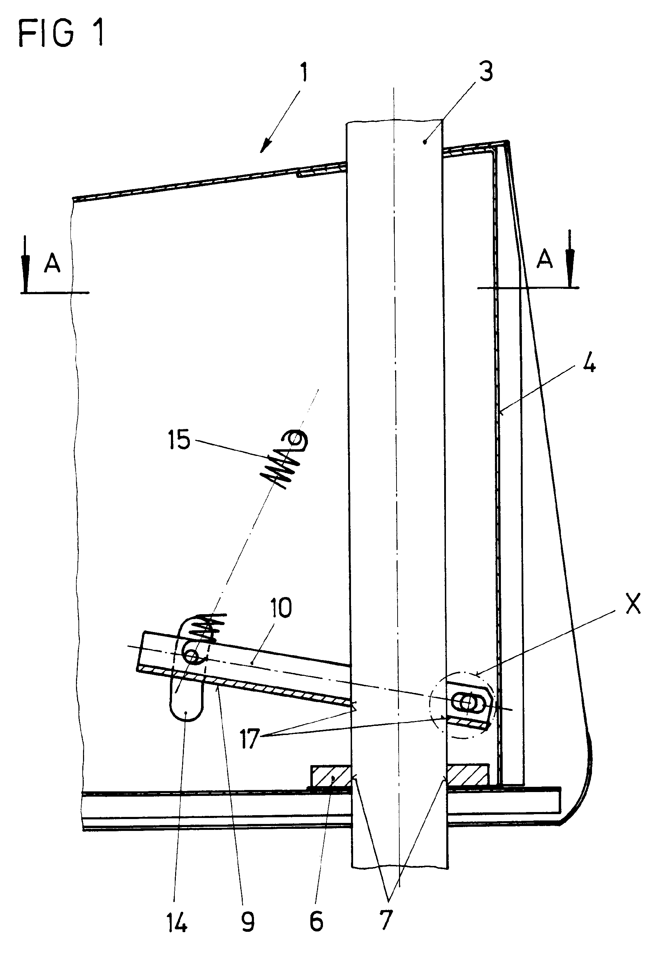

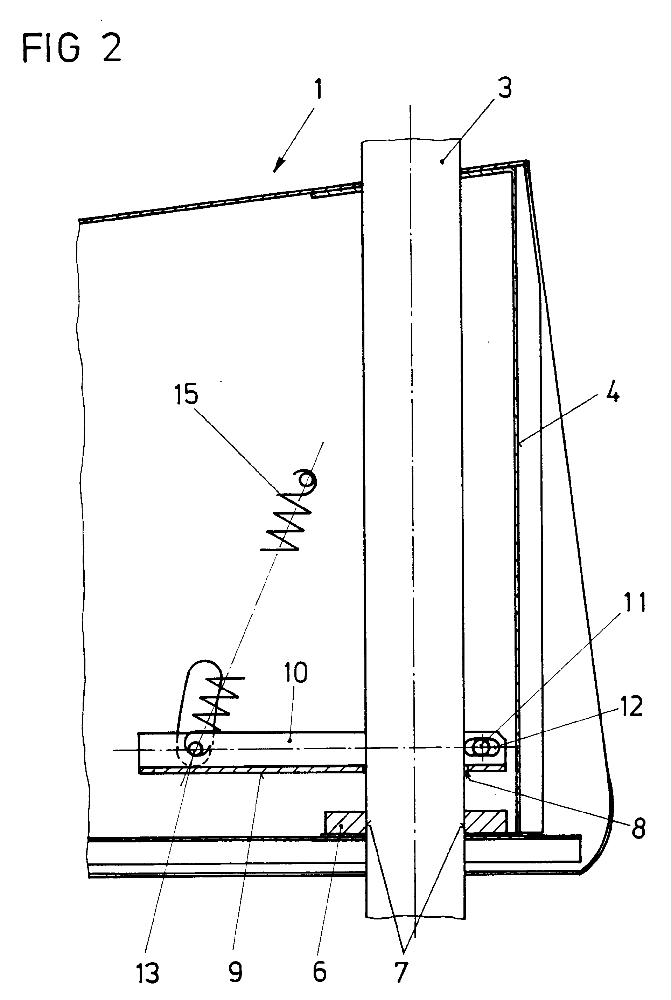

Das in der Zeichnung dargestellte Prüfgerät für Fahrzeugscheinwerfer besteht im wesentlichen aus dem in der Höhe verstellbaren Optikkasten (1) und einem den Optikkasten tragenden Gestell, von dem ein durch den Optikkasten gehender Abschnitt der Führungssäule (2) und ein durch den Optikkasten gehender Abschnitt der Arretierungssäule (3) dargestellt sind. Der Optikkasten (1) trägt an seiner nicht dargestellten Vorderseite eine Sammellinse und durch den Optikkasten gesehen in der Nähe der äußeren vertikalen Kanten an seiner Rückseite die vertikal verlaufende Führungssäule (2) und die vertikal verlaufende Arretierungssäule (3). Die Führungssäule (2) und die Arretierungssäule (3) weisen einen kreisrunden Querschnitt auf. Die Führungssäule (2) geht in der Nähe der oberen und unteren Seite des Optikkastens durch eine starr mit dem Optikkasten verbundene Lagerhülse (5) hindurch. In der Nähe der unteren Seite des Optikkastens (1) geht die Arretierungssäule (3) durch die starr mit dem Optikkasten verbundene Hülse (6) hindurch. Die Hülse (6) verhindert, daß der Optikkasten (1) um die Führungssäule (3) verdrehbar ist. Die Hülse (6) weist an ihrer Innenseite zwei parallel zueinander verlaufende Flächen (7) auf, welche somit linienförmig an der Arretierungssäule (3) anliegen. Dadurch ist es möglich, sowohl den Abstand zwischen der Führungssäule (2) und der Arretierungssäule (3) als auch der Hülse (6) zu den Lagerhülsen (5) sehr grob zu tolerieren. Außerdem entsteht bei der Höhenverstellung des Optikkastens wegen der linienförmigen Anlage zwischen den Flächen (7) der Hülse (6) und der Arretierungssäule (3) eine sehr kleine Reibung zwischen der Hülse (6) und der Arretierungssäule (3). Die Arretierungssäule (3) geht in der Nähe der unteren Seite des Optikkastens durch die öffnung (8) der als einarmiger Hebel wirkenden, rechteckförmigen Platte (9) hindurch. Die Platte (9) ist aus Blech hergestellt und weist durch die an ihren langen Längsseiten nach oben hin abgewinkelten Randabschnitte (10) einen U-förmigen Querschnitt auf. Als Schwenkachse der Platte (9) dient der Bolzen (11). Der Bolzen (11) verläuft zwischen der Arretierungssäule (3) und der Rückseite (4) des Optikkastens und parallel zur Rückseite (4). Der Bolzen (11) geht durch die in die abgewinkelten Randabschnitte (10) eingebrachte öffnung (12) hindurch und greift mit seinen Endabschnitten in eine kreisrunde öffnung einer äußeren und einer inneren Seitenwandung des Optikkastens ein. Die öffnungen (12) der Platte (9) sind Längsschlitze, deren Hauptausdehnung in Längsausdehnung der Platte (9) verläuft. Die öffnung (8) in der Platte (9) weist einen größeren Querschnitt auf als die Arretierungssäule (3). Um den Bolzen (11) ist die Platte (9) von der in Figur 2 dargestellten ersten Endstellung, in welcher die Platte horizontal verläuft, in ihre in Figur 1 dargestellte zweite Endstellung schwenkbar. Zum Verschwenken der Platte dient die an ihrem freien Endabschnitt angebrachte Handhabe (13), welche ein Bolzen ist, der in öffnungen der abgewinkelten Randabschnitte (10) der Platte (9) eingreift. Der Bolzen (10) ragt durch die in den Optikkasten eingebrachte öffnung (14) nach außen. Die öffnung (14) ist ein Längsschlitz, welcher in seiner Längsausdehnung einen Bogen beschreibt, dessen Mittelpunkt auf der Schwenkachse liegt. Zwischen dem Bolzen (13) und einer oberhalb der Platte (9) angeordneten Wandung des Optikkastens (1) ist das federnde Element (15) auf Zug eingesetzt. Als federndes Element (15) dient eine Schraubenfeder, welche an ihren freien Enden zu ihrer Befestigung dienende ösen aufweist.

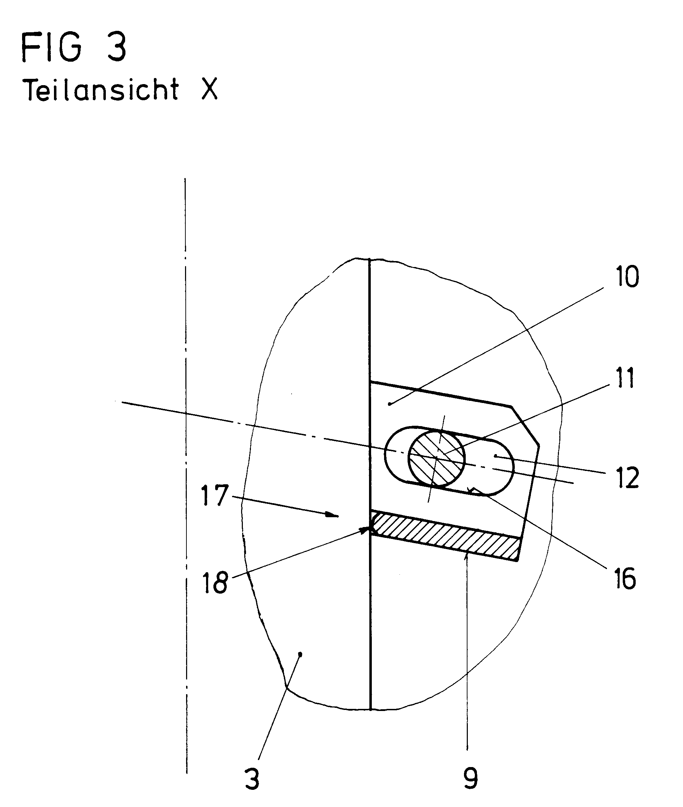

Bei der in Figur 1 dargestellten zweiten Endstellung der Platte (9) liegt der Optikkasten (1) bzw. der an dem Optikkasten befestigte Bolzen (11) an der Platte (9) an. Als Anlagefläche für den Bolzen (11) dient der nach oben gerichtete Innenseitenabschnitt der in die Platte (9) eingebrachten öffnungen (12). Wegen des an der Platte (9) anliegenden Optikkastens (1) liegt die Platte (9) mit den Randabschnitten (17), von denen einer der Schwenkachse abgewandt und der andere der Schwenkachse zugewandt ist, an der Säule an. Der Durchmesser der öffnung (8) in der Platte (9) ist zwischen den Randabschnitten (17) kleiner als in dem dazwischenliegenden Bereich. Die Innenseite der öffnung (8) weist im Bereich der Randabschnitte (17) drei konzentrisch zur Mittelachse verlaufende und in einem stumpfen Winkel zueinanderstehende Flächen auf. Eine der zwischen den Flächen verlaufenden beiden Kantenabschnitte (18) (siehe Figur 1 und 3) liegt an der Arretierungssäule an. Die dabei entstehende geringe Deformation an der Säule, ist in der Zeichnung nicht zu sehen. Beim Lösen der Platte (9) von der Arretierungssäule (3), ist der Optikkasten von seiner Rückseite zu untergreifen und die Platte (9) durch ihre Handhabe (13) entgegen der Zugkraft des federnden Elements (15) nach unten hin zu schwenken. Dabei gleitet die Anlagefläche (16) der öffnung (12) der Platte an dem Bolzen (11) einen entsprechenden Weg entlang. In der zweiten Endstellung (siehe Figur 2) ist die Platte (10) in horizontaler Lage entgegen der Zugkraft des federnden Elements gehalten. In dieser Endstellung besteht zwischen der öffnung (8) und der Arretierungssäule (3) Spiel, so daß der Optikkasten in der Höhe verstellbar ist. Nach Erreichen der gewünschten Höhe des Optikkastens schwenkt nach dem Loslassen der Handhabe durch die Zugkraft des federnden Elementes (15) die Platte (9) in ihre erste Endstellung selbsttätig zurück.

## Patentansprüche

1. Prüfgerät für Fahrzeugscheinwerfer, mit einem Optikkasten (1), welcher an einem Gestell in der Höhe verstellbar geführt ist, und mit einer den Optikkasten (1) an einer vertikal verlaufenden Säule (3) selbst tragenden Arretierungsvorrichtung, welche an der Säule (3) in unterschiedlichen Höhen lösbar und festsetzbar ist,
dadurch gekennzeichnet, daß
- die Arretierungsvorrichtung aus einer als einarmiger Hebel wirkenden Platte (9) besteht, welche mit dem Optikkasten (1) schwenkbar verbunden ist, in welche eine Öffnung (8) eingebracht ist, durch welche die Säule (3) hindurchgeführt ist, und welche in ihrem Querschnitt größer als der Querschnitt der Säule (3) ist,
- die Platte (9) zwischen zwei Grenzen in eine erste Endstellung, in welcher die Platte (9) von der Säule (3) gelöst ist, und ausgehend von der ersten Endstellung nach oben hin in eine zweite Endstellung, in welcher die Platte (9) an der Säule (3) festgesetzt ist, schwenkbar ist,
- in der ersten Endstellung der Platte (9) die Projektionsfläche ihrer Öffnung (8) in Richtung der Längsachse der Säule (3) gesehen in ihrer Abmessung senkrecht zur Schwenkachse der Platte (9) größer als die entsprechende Außenabmessung der Säule (3) ist, und in der zweiten Endstellung der Platte (9) der Optikkasten (1) auf einer Seite der Säule (3) an der Platte (9) aufliegt und durch die Auflagestelle die Schwenkachse für die Platte (9) gebildet ist, wobei die Platte (9) durch die Masse des Optikkastens (1) mit sich gegenüberliegenden Randabschnitten (17) ihrer Öffnung gegen die Säule (3) gedrückt ist,
- die Säule (3) durch den Optikkasten (1) in der Nähe einer Seite (4) des Optikkastens (1) hindurchgeht, welche der die Sammellinse tragenden Seite gegenüberliegt,
- der Optikkasten (1) in seinem Inneren die verschwenkbare Platte (9) aufnimmt und eine Öffnung (8) für eine zum Verschwenken der Platte (9) dienende Handhabe (13) aufweist.

2. Prüfgerät nach Anspruch 1, dadurch gekennzeichnet, daß die Platte (9) in der ersten Endstellung etwa in einer Horizontalebene verläuft.

3. Prüfgerät nach Anspruch 1 oder 2, dadurch gekennzeichnet, daß die Platte (9) von ihrer ersten Endstellung durch ein zwischen sie und dem Optikkasten eingesetztes federndes Element (15) nach oben hin in ihre zweite Endstellung schwenkbar ist.

4. Prüfgerät nach Anspruch 3, dadurch gekennzeichnet, daß die Säule (3) zwischen dem federnden Element (15) und der Schwenkachse der Platte (9) verläuft.

5. Prüfgerät nach einem der Ansprüche 1 bis 4, dadurch gekennzeichnet, daß die Handhabe (13) der Platte (9) zur Säule (3) hin einen größeren Abstand aufweist als die Schwenkachse.

6. Prüfgerät nach einem der Ansprüche 3 bis 5, dadurch gekennzeichnet, daß das federnde Element (15) mit der Handhabe (13) der Platte (9) oder in der Nähe der Handhabe (13) mit der Platte (9) selbst verbunden ist.

7. Prüfgerät nach Anspruch 5 oder 6, dadurch gekennzeichnet, daß die Handhabe (13) ein an der Platte (9) befestigter Griff ist, welcher durch die Öffnung (14) in einer Seitenwandung des Optikkastens (1) nach außen ragt.

8. Prüfgerät nach Anspruch 7, dadurch gekennzeichnet, daß die Öffnung (14) ein Längsschlitz ist, welcher in seiner Längsausdehnung in einen Bogen verläuft, dessen Mittelpunkt auf der Schwenkachse liegt.

9. Prüfgerät nach einem der Ansprüche 1 bis 8, dadurch gekennzeichnet, daß die Platte (9) um einen Bolzen (11) herum schwenkbar ist.

10. Prüfgerät nach Anspruch 9, dadurch gekennzeichnet, daß der Bolzen (11) an dem Optikkasten (1) oder der Platte (9) befestigt ist.

11. Prüfgerät nach Anspruch 9 oder 10, dadurch gekennzeichnet, daß an dem Bolzen (11) entweder der Optikkasten (1) oder die Platte (9) mit einer Abroll- oder Gleitfläche (16) anliegt.

12. Prüfgerät nach Anspruch 11, dadurch gekennzeichnet, daß die Abroll- oder Gleitfläche (16) etwa in Richtung der Längsausdehnung der Platte verläuft.

13. Prüfgerät nach Anspruch 11 oder 12, dadurch gekennzeichnet, daß die Gleit- oder Abrollfläche (16) ein Abschnitt der Innenseite einer in die Platte (9) oder des Optikkastens eingebrachten Öffnung (12) ist.

14. Prüfgerät nach Anspruch 13, dadurch gekennzeichnet, daß die Öffnung (12) ein Längsschlitz ist, dessen Breite etwa dem Durchmesser des Bolzens (11) entspricht.

15. Prüfgerät nach einem der Ansprüche 1 bis 14, dadurch gekennzeichnet, daß die Platte (9) rechteckförmig ausgeführt ist und quer zu ihrer Längsausdehnung einen U-förmigen Querschnitt aufweist.

16. Prüfgerät nach Anspruch 15, dadurch gekennzeichnet, daß der Bolzen (11) zwischen den Schenkeln (10) der U-Form verläuft und in jeweils eine in die Schenkel (10) eingebrachte Öffnung (12) eingreift.

17. Prüfgerät nach einem der Ansprüche 1 bis 16, dadurch gekennzeichnet, daß die Öffnung (8) der Platte (9) quer zur Längsausdehnung der Platte eine größere Abmessung als in Richtung ihrer Längsausdehnung aufweist.

18. Prüfgerät nach einem der Ansprüche 1 bis 17, dadurch gekennzeichnet, daß die mit der Säule (3) zusammenwirkenden Randabschnitte (17) der Öffnung (8) der Platte (9) Kanten (18) aufweisen, welche in der zweiten Endstellung der Platte (9) geringfügig in die Oberfläche der Säule (3) eingedrückt sind.

19. Prüfgerät nach Anspruch 18, dadurch gekennzeichnet, daß die Kanten (18) von zwei in einem stumpfen Winkel zueinander verlaufenden Flächen der Innenseite der Öffnung (8) gebildet sind.

20. Prüfgerät nach einem der Ansprüche 1 bis 19, dadurch gekennzeichnet, daß die Säule (3) einen kreisrunden Querschnitt aufweist und die in der zweiten Endstellung der Platte (9) an der Säule anliegenden Randabschnitte (17) der Öffnung (8) entsprechende Kreisbogenabschnitte sind.

21. Prüfgerät nach einem der Ansprüche 1 bis 20, dadurch gekennzeichnet, daß die durch die Öffnung (8) der Platte (9) gehende Säule (3) ausschließlich der Arretierung des Optikkastens (1) dient.

22. Prüfgerät nach einem der Ansprüche 1 bis 21, dadurch gekennzeichnet, daß das Prüfgerät sowohl die Arretierungssäule (3) als auch eine Führungssäule (2) für den Optikkasten (1) aufweist.

23. Prüfgerät nach Anspruch 22, dadurch gekennzeichnet, daß sowohl die Arretierungssäule (3) als auch die Führungssäule (2) einen kreisrunden Querschnitt aufweist.

24. Prüfgerät nach einem der vorstehenden Ansprüche, dadurch gekennzeichnet, daß die Platte (9) mit ihrem als Handhabe (13) dienenden Endabschnitt zu der Sammellinse hinweist und parallel zu einer äußeren Seitenwandung des Optikkastens verläuft.

## Claims

1. Instrument for testing vehicle headlamps, comprising an optics box (1) set in height-adjustable manner on a frame, and a locking unit which carries the lens-system box (1) in self-supporting manner on a vertical column (3) and which is adapted to be released and locked at different heights on the column (3),
characterised in that
- the locking unit consists of a plate (9) which acts as a single-armed lever and is pivotably connected to the lens-system box (1) and which incorporates an opening (8) through which the column (3) passes, and which is larger in cross-section than the cross-section of the column (3),
- the plate (9) is adapted to be pivoted between two limits into a first extreme position in which the plate (9) is released from the column (3), and moving up from the first extreme position into a second extreme position in which the plate (9) is locked in position on the column (3),
- when the plate (9) is in the first extreme position, the projected area of its opening (8), looking down the longitudinal axis of the column (3), is larger in size perpendicular to the pivot axis of the plate (9) than the corresponding external dimension of the column (3), and when the plate (9) is in the second extreme position, the lens-system box (1) bears on one side of the column (3) against the plate (9) and the point of contact forms the pivot axis for the plate (9), the mass of the lens-system box (1) pressing the plate (9) by opposite rim portions (17) of its opening against the column (3),
- the column (3) passes through the lens-system box (1) near to one side (4) of the lens-system box (1) that is opposite the side carrying the collimating lens,
- the interior of the lens-system box (1) receives the pivotable plate (9) and incorporates an opening (8) for a handle (13) used to pivot the plate (9).

2. Test instrument according to claim 1, characterised in that in the first extreme position the plate (9) extends more or less in a horizontal plane.

3. Test instrument according to claim 1 or 2, characterised in that the plate (9) is adapted to be pivoted up from its first extreme position and into its second extreme position by a spring element (15) inserted between it and the lens-system box.

4. Test instrument according to claim 3, characterised in that the column (3) extends between the spring element (15) and the pivot axis of the plate (9).

5. Test instrument according to any of claims 1 to 4, characterised in that the handle (13) of the plate (9) is further from the column (3) than is the pivot axis.

6. Test instrument according to any of claims 3 to 5, characterised in that the spring element (15) is connected to the handle (13) of the plate (9) or near the handle (13) to the plate (9) itself.

7. Test instrument according to claim 5 or 6, characterised in that the handle (13) is a grip attached to the plate (9) and protruding out through the opening (14) in a side wall of the lens-system box (1).

8. Test instrument according to claim 7, characterised in that the opening (14) is a slot the longitudinal extension of which forms an arc with its centre on the pivot axis.

9. Test instrument according to any of claims 1 to 8, characterised in that the plate (9) is adapted to swivel about a pin (11).

10. Test instrument according to claim 9, characterised in that the pin (11) is attached to the lens-system box (1) or to the plate (9).

11. Test instrument according to claim 9 or 10, characterised in that either the lens-system box (1) or the plate (9) rests by a tread surface or sliding surface (16) against the pin (11).

12. Test instrument according to claim 11, characterised in that the tread or sliding surface (16) runs more or less in the direction of longitudinal extension of the plate.

13. Test instrument according to claim 11 or 12, characterised in that the sliding or tread surface (16) is a portion of the inside face of an opening (12) incorporated in the plate (9) or of the lens-system box.

14. Test instrument according to claim 13, characterised in that the opening (12) is a slot whose width roughly matches the diameter of the pin (11).

15. Test instrument according to any of claims 1 to 14, characterised in that the plate (9) is rectangular and transverse to its longitudinal extension is U-shaped in cross-section.

16. Test instrument according to claim 15, characterised in that the pin (11) runs between the legs (10) of the U and engages in a respective opening (12) in each of the legs (10).

17. Test instrument according to any of claims 1 to 16, characterised in that the size of the opening (8) in the plate (9) is greater transverse to the longitudinal extension of the plate than in the direction of its longitudinal extension.

18. Test instrument according to any of claims 1 to 17, characterised in that the rim portions (17) of the opening (8) in the plate (9) which cooperate with the column (3) incorporate edges (18) which when the plate (9) is in the second extreme position are lightly indented into the surface of the column (3).

19. Test instrument according to claim 18, characterised in that the edges (18) are formed by two faces of the inside of the opening (8) which extend at an obtuse angle to one another.

20. Test instrument according to any of claims 1 to 19, characterised in that the column (3) is circular in cross-section and the rim portions (17) of the opening (8) which rest against the column when the plate (9) is in the second extreme position are corresponding circular arc portions.

21. Test instrument according to any of claims 1 to 20, characterised in that the column (3) passing through the opening (8) in the plate (9) is used exclusively to lock the lens-system box (1) in position.

22. Test instrument according to any of claims 1 to 21, characterised in that the test instrument incorporates both the locking column (3) and a guiding column (2) for the lens-system box (1).

23. Test instrument according to claim 22, characterised in that both the locking column (3) and the guiding column (2) are circular in cross-section.

24. Test instrument according to any of the preceding claims, characterised in that the plate (9) has its end acting as the handle (13) pointing towards the collimating lens and parallel to one external side wall of the lens-system box.

## Revendications

1. Appareil d'essai pour phares de véhicules comportant un coffret optique (1) qui est guidé sur un bâti de manière à pouvoir être réglé en hauteur, et un dispositif d'arrêt qui porte de lui-même le coffret optique (1) sur une colonne (3) verticale, le dispositif d'arrêt pouvant être desserré ou fixé à différentes hauteurs sur la colonne (3), caractérisé en ce que
- le dispositif d'arrêt est composé d'une plaque (9) agissant comme un levier à un bras, laquelle est reliée en pivotement au coffret optique (1), dans laquelle est ménagée une ouverture (8) à travers laquelle passe la colonne (3) et qui présente une section supérieure à la section de la colonne (3),
- la plaque (9) peut être pivotée entre deux limites dans une première position finale dans laquelle la plaque (9) est libérée de la colonne (3), et partant de la première position finale, allant vers le haut, dans une seconde position finale dans laquelle la plaque (9) est fixée sur la colonne (3),
- dans la première position finale de la plaque (9), la surface de projection de son ouverture (8), vue en direction de l'axe longitudinal de la colonne (3), présente perpendiculairement à l'axe de pivotement de la plaque (9) une dimension supérieure à la dimension extérieure correspondante de la colonne (3), et dans la seconde position finale de la plaque (9), le coffret optique (1) repose sur la plaque (9) sur un côté de la colonne (3), et l'axe de pivotement pour la plaque (9) est formé par le point d'appui, la plaque (9) étant pressée par la masse du coffret optique (1) contre la colonne (3) avec des zones de bordure (17) de son ouverture qui se font face,
- la colonne (3) passe à travers le coffret optique (1) à proximité d'un côté (4) du coffret optique (1) qui est opposé au côté portant la lentille convergente,
- le coffret optique (1) reçoit dans son intérieur la plaque (9) pivotante et présente une ouverture (8) pour une manette (13) servant au pivotement de la plaque (9).

2. Appareil d'essai selon la revendication 1, caractérisé en ce que la plaque (9) s'étend dans la première position finale approximativement dans un plan horizontal.

3. Appareil d'essai selon la revendication 1 ou 2, caractérisé en ce que la plaque peut être pivotée depuis sa première position finale vers le haut dans sa seconde position finale grâce à un élément élastique (15) placé entre elle et le coffret optique.

4. Appareil d'essai selon la revendication 3, caractérisé en ce que la colonne (3) s'étend entre l'élément élastique (15) et l'axe de pivotement de la plaque (9).

5. Appareil d'essai selon l'une des revendications 1 à 4, caractérisé en ce que la manette (13) de la plaque (9) présente en direction de la colonne (3) un plus grand écartement que l'axe de pivotement.

6. Appareil d'essai selon l'une des revendications 3 à 5, caractérisé en ce que l'élément élastique (15) est lui-même relié à manette (13) de la plaque (9) ou à la plaque (9) elle-même à proximité de la manette (13).

7. Appareil d'essai selon la revendication 5 ou 6, caractérisé en ce que la manette (13) est une poignée fixée sur la plaque (9) qui fait saillie vers l'extérieur à travers l'ouverture (14) ménagée dans une paroi latérale du coffret optique (1).

8. Appareil d'essai selon la revendication 7, caractérisé en ce que l'ouverture (14) est une fente oblongue qui s'étend longitudinalement en un arc dont le centre se trouve sur l'axe de pivotement.

9. Appareil d'essai selon l'une des revendications 1 à 8, caractérisé en ce que la plaque (9) peut être pivotée autour d'un goujon (11).

10. Appareil d'essai selon la revendication 9, caractérisé en ce que le goujon (11) est fixé sur le coffret optique (1) ou sur la plaque (9).

11. Appareil d'essai selon la revendication 9 ou 10, caractérisé en ce que soit le coffret optique (1) soit la plaque (9) est en contact sur le goujon (11) par une surface de roulement ou de coulissement (16).

12. Appareil d'essai selon la revendication 11, caractérisé en ce que la surface de roulement ou de coulissement (16) s'étend approximativement en direction de l'extension longitudinale de la plaque.

13. Appareil d'essai selon la revendication 11 ou 12, caractérisé en ce que la surface de coulissement ou de roulement (16) représente un segment de la face intérieure d'une ouverture (12) ménagée dans la plaque (9) ou le coffret optique.

14. Appareil d'essai selon la revendication 13, caractérisé en ce que l'ouverture (12) est une fente oblongue dont la largeur correspond approximativement au diamètre du goujon (11).

15. Appareil d'essai selon l'une des revendications 1 à 14, caractérisé en ce que la plaque (9) est réalisée sous forme rectangulaire et présente une section en U transversalement à son extension longitudinale.

16. Appareil d'essai selon la revendication 15, caractérisé en ce que le goujon (11) s'étend entre les bras (10) de la forme en U et s'engage dans chacune des ouvertures (12) ménagées entre les bras (10).

17. Appareil d'essai selon l'une des revendications 1 à 16, caractérisé en ce que l'ouverture (8) de la plaque (9) a, transversalement à l'extension longitudinale de la plaque, une dimension plus grande qu'en direction de l'extension longitudinale.

18. Appareil d'essai selon l'une des revendications 1 à 17, caractérisé en ce que les zones de bordure (17) de l'ouverture (8) de la plaque (9) qui coopèrent avec la colonne (3) présentent des arêtes (18) qui sont légèrement enfoncées dans la surface de la colonne (3) lorsque la plaque (9) est en seconde position finale.

19. Appareil d'essai selon la revendication 18, caractérisé en ce que les arêtes (18) sont formées par deux surfaces de la face intérieure de l'ouverture (8) se rejoignant sous un angle obtus.

20. Appareil d'essai selon l'une des revendications 1 à 19, caractérisé en ce que la colonne (3) présente une section circulaire et en ce que les zones de bordure (17) de l'ouverture (8) qui sont en contact sur la colonne en seconde position finale de la plaque (9) sont des segments d'arc de cercle correspondants.

21. Appareil d'essai selon l'une des revendications 1 à 20, caractérisé en ce que la colonne passant à travers l'ouverture (8) de la plaque (9) sert exclusivement à l'arrêt du coffret optique (1).

22. Appareil d'essai selon l'une des revendications 1 à 21, caractérisé en ce que l'appareil d'essai présente non seulement la colonne d'arrêt (3) mais aussi une colonne de guidage (2) pour le coffret optique (1).

23. Appareil d'essai selon la revendication 22, caractérisé en ce que non seulement la colonne d'arrêt (3), mais aussi la colonne de guidage (2) présentent une section circulaire.

24. Appareil d'essai selon l'une des revendications précédentes, caractérisé en ce que la plaque (9) est orientée avec son extrémité servant de manette (13) vers la lentille convergente et s'étend parallèlement à une paroi latérale extérieure du coffret optique.
